# EUROPÄISCHE PATENTANMELDUNG

(11) **EP 4 239 228 A1**
(43) Veröffentlichungstag der Anmeldung: **06.09.2023**
(21) Anmeldenummer: 23157341.1
(22) Anmeldetag: 17.02.2023
(51) Int. Cl.: F16J 15/3204, F16J 15/3224, F16J 15/324

(54) **DICHTUNGSANORDNUNG, UMFASSEND EINEN AXIALDICHTRING**

(30) Priorität: 03.03.2022 DE 102022105004
(71) Anmelder: Carl Freudenberg KG, 69469 Weinheim (DE)
(72) Erfinder: Ilinseer, Albert, 21220 Seevetal (DE)

(57) **Zusammenfassung**

Dichtungsanordnung, umfassend ein erstes Maschinenelement (1) und ein zweites Maschinenelement (2), wobei die Maschinenelemente (1, 2) konzentrisch zueinander angeordnet, um eine Rotationsachse (3) relativ zueinander verdrehbar und einander in axialer Richtung (4) mit Abstand (5) benachbart zugeordnet sind sowie einen Axialdichtring (6), der in einer Einbaunut (7) des ersten Maschinenelements (1) dichtend angeordnet ist und eine Dichtfläche (8) des zweiten Maschinenelements (2) mit zumindest einer Dichtlippe (9) unter axialer Vorspannung dichtend berührt. Die Einbaunut (7) ist, bezogen auf die Rotationsachse (3), in radialer Richtung (10) exzentrisch verschoben angeordnet.

## Beschreibung

### Technisches Gebiet

Die Erfindung betrifft eine Dichtungsanordnung, umfassend ein erstes Maschinenelement und ein zweites Maschinenelement, wobei die Maschinenelemente konzentrisch zueinander angeordnet, um eine Rotationsachse relativ zueinander verdrehbar und einander in axialer Richtung mit Abstand benachbart zugeordnet sind sowie einen Axialdichtring, der in einer Einbaunut des ersten Maschinenelements dichtend angeordnet ist und eine Dichtfläche des zweiten Maschinenelements mit zumindest einer 1. Dichtlippe unter axialer Vorspannung dichtend berührt.

### Stand der Technik

Eine solche Dichtungsanordnung ist allgemein bekannt.

Die beiden Maschinenelemente sind in axialer Richtung mit Abstand zueinander benachbart angeordnet, wobei durch den axialen Abstand ein axialer Dichtspalt gebildet ist. Der Axialdichtring ist zum Beispiel durch eine statisch beanspruchte 2. Dichtlippe in der Einbaunut dichtend angeordnet und liegt zum Beispiel mit der dynamisch beanspruchten 1. Dichtlippe an der Dichtfläche dichtend an.

Die Einbaunut ist, bezogen auf die Rotationsachse, konzentrisch angeordnet, ebenso wie die statisch beanspruchte 2. Dichtlippe und die dynamisch beanspruchte 1. Dichtlippe.

Während der bestimmungsgemäßen Verwendung der vorbekannten Dichtungsanordnung läuft die dynamisch beanspruchte 1. Dichtlippe des Axialdichtrings deshalb immer auf derselben Laufspur der Dichtfläche. Dabei ist von Nachteil, dass die Schmierung der dynamisch beanspruchten Dichtlippe wenig zufriedenstellend ist, dadurch unerwünscht hohe Temperaturen entstehen und erhöhter Verschleiß, der zu einem frühzeitigen Ausfall des Axialdichtrings und damit der gesamten Dichtungsanordnung führen kann.

### Darstellung der Erfindung

Der Erfindung liegt die Aufgabe zugrunde, eine Dichtungsanordnung der eingangs genannten Art derart weiterzuentwickeln, dass diese gute Gebrauchseigenschaften während einer langen Gebrauchsdauer aufweist. Insbesondere sollen die Gebrauchseigenschaften und die Gebrauchsdauer des Axialdichtrings verbessert werden.

Diese Aufgabe wird erfindungsgemäß durch eine Dichtungsanordnung mit den Merkmalen von Anspruch 1 gelöst. Auf vorteilhafte Ausgestaltungen nehmen die auf Anspruch 1 direkt oder indirekt rückbezogenen Ansprüche Bezug.

Zur Lösung der Aufgabe ist es vorgesehen, dass die Einbaunut, bezogen auf die Rotationsachse, in radialer Richtung exzentrisch verschoben angeordnet ist. Hierbei ist von Vorteil, dass die in radialer Richtung exzentrisch zur Rotationsachse verschobene Einbaunut zu einer verbesserten Schmierung der dynamisch beanspruchten 1. Dichtlippe des Axialdichtrings durch eine Verbreiterung der Laufspur der 1. Dichtlippe auf der Dichtfläche führt. Durch die verbesserte Schmierung ist die Wärmeableitung während der bestimmungsgemäßen Verwendung des Axialdichtrings aus der ersten Dichtlippe verbessert und dadurch auch die Gebrauchsdauer des Axialdichtrings und der gesamten Dichtungsanordnung.

Durch die zuvor beschriebene exzentrisch verschobene Anordnung der Einbaunut bezogen auf die Rotationsachse kann als Axialdichtring ein aus dem Stand der Technik bekannter, konventioneller Axialdichtring zur gegenseitigen Abdichtung der beiden Maschinenelemente zur Anwendung gelangen. Solche konventionellen Axialdichtringe sind in unterschiedlichen Größen und Geometrien und aus unterschiedlichen Werkstoffen kostengünstig verfügbar. Relativ teurer Sonderbauformen, bei denen eine Asymmetrie im Axialdichtring vorgesehen ist, bedarf es daher nicht. Alle Dichtlippen des Axialdichtrings, die statisch beanspruchten und die dynamisch beanspruchten, sind konzentrisch zueinander und symmetrisch ausgebildet.

Wie zuvor bereits ausgeführt, bewirkt die asymmetrische Verschiebung der Einbaunut in radialer Richtung relativ zur Rotationsachse eine Verbreiterung der Laufspur des Axialdichtrings auf der Dichtfläche des zweiten Maschinenelements. Dadurch gelangt bei jeder Umdrehung des Axialdichtrings relativ zum zweiten Maschinenelement frisches abzudichtendes Medium zur Schmierung aktiv unter die dynamisch beanspruchte, die Dichtfläche berührende 1. Dichtlippe. Diese Dichtlippe läuft immer auf einer durch das abzudichtende Medium frisch geschmierten Laufspur. Die Reibung ist dadurch minimiert und die Wärmeableitung maximiert, so dass der Axialdichtring und die Dichtungsanordnung, die den Axialdichtring umfasst, stets gleichbleibend gute Gebrauchseigenschaften während einer langen Gebrauchsdauer aufweisen.

Bei dem abzudichtenden Medium handelt es sich bevorzugt um einen Schmierstoff.

Nach einer vorteilhaften Ausgestaltung kann es vorgesehen sein, dass die exzentrische Verschiebung in radialer Richtung 0,01 mm bis 20 mm, weiter bevorzugt 0,1 mm bis 1 mm beträgt. Für viele Durchmesserbereiche von Axialdichtringen ist eine derartige exzentrische Verschiebung der Einbaunut zielführend, um die zuvor beschriebenen vorteilhaften Gebrauchseigenschaften der Dichtungsanordnung zu erreichen.

Der Axialdichtring kann einstückig und materialeinheitlich ausgebildet sein. Eine solche Ausgestaltung bewirkt eine einfache und kostengünstige Herstellung. Außerdem ist von Vorteil, dass ein solcher Axialdichtring im Anschluss an seine Verwendung sortenrein recyclebar ist.

Gemäß einer vorteilhaften Ausgestaltung kann es vorgesehen sein, dass die Dichtlippe des Axialdichtrings symmetrisch ausgebildet ist. Axialdichtringe mit symmetrisch ausgebildeten Dichtlippen sind, wie zuvor beschrieben, allgemein bekannt. Die zuvor beschriebenen vorteilhaften Gebrauchseigenschaften hat der Axialdichtring durch seinen Einbau in die in radialer Richtung exzentrisch zur Rotationsachse verschobene Einbaunut und durch die daraus resultierende Verbreiterung seiner Laufspur auf der Dichtfläche des zweiten Maschinenelements.

In Abhängigkeit vom jeweiligen Anwendungsfall besteht jedoch auch die Möglichkeit, einen Axialdichtring in der erfindungsgemäßen Dichtungsanordnung zu montieren, bei dem die dynamisch beanspruchte 1. Dichtlippe bezogen auf eine statisch beanspruchte 2. Dichtlippe des Axialdichtrings in radialer Richtung exzentrisch angeordnet ist.

Dabei kann, je nach Einbau des Axialdichtrings in die Einbaunut in Umfangsrichtung betrachtet, der Effekt der exzentrisch verschoben angeordneten Einbaunut verstärkt oder reduziert werden. Hinsichtlich einer möglichst universellen Verwendbarkeit der Dichtungsanordnung kann das von Vorteil sein.

Die 1. Dichtlippe kann radial innen- oder radial außendichtend am Axialdichtring angeordnet sein, abhängig vom jeweiligen Anwendungsfall.

### Kurzbeschreibung der Zeichnung

Zwei Ausführungsbeispiele der erfindungsgemäßen Dichtungsanordnung werden nachfolgen anhand der Figuren 1 bis 3 näher erläutert.

Diese zeigen jeweils in schematischer Darstellung:
Figur 1 eine Schnittdarstellung eines ersten Ausführungsbeispiels einer erfindungsgemäßen Dichtungsanordnung, radial innendichtend,
Figur 2 eine Schnittdarstellung eines zweiten Ausführungsbeispiels einer erfindungsgemäßen Dichtungsanordnung, radial außendichtend,
Figur 3 eine Ansicht des in der Einbaunut montierten Axialdichtrings, mit eingezeichneter Laufspur auf der Dichtfläche des zweiten Maschinenelements, gemäß Figur 1.

### Ausführung der Erfindung

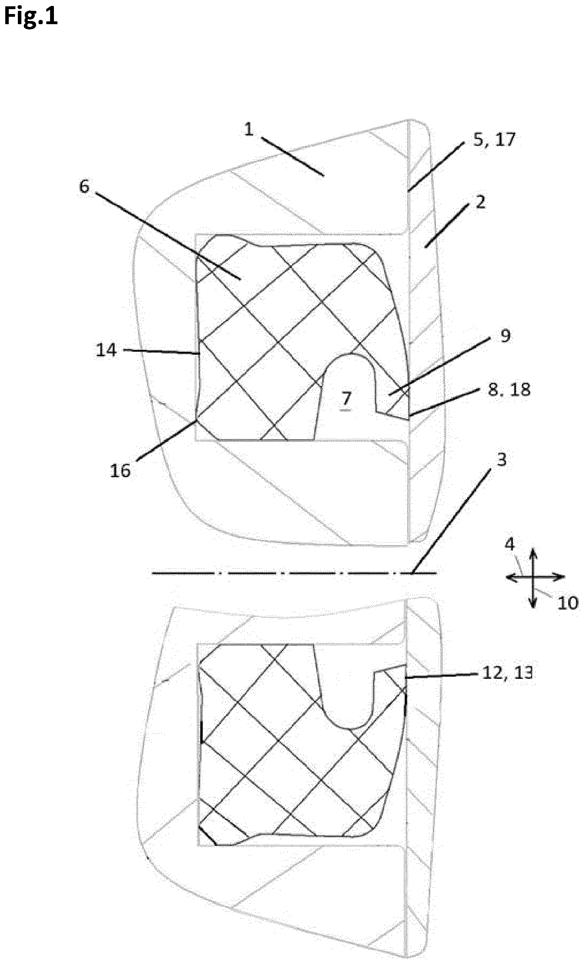

In den Figuren 1 bis 3 sind zwei Ausführungsbeispiele der erfindungsgemäßen Dichtungsanordnung gezeigt.

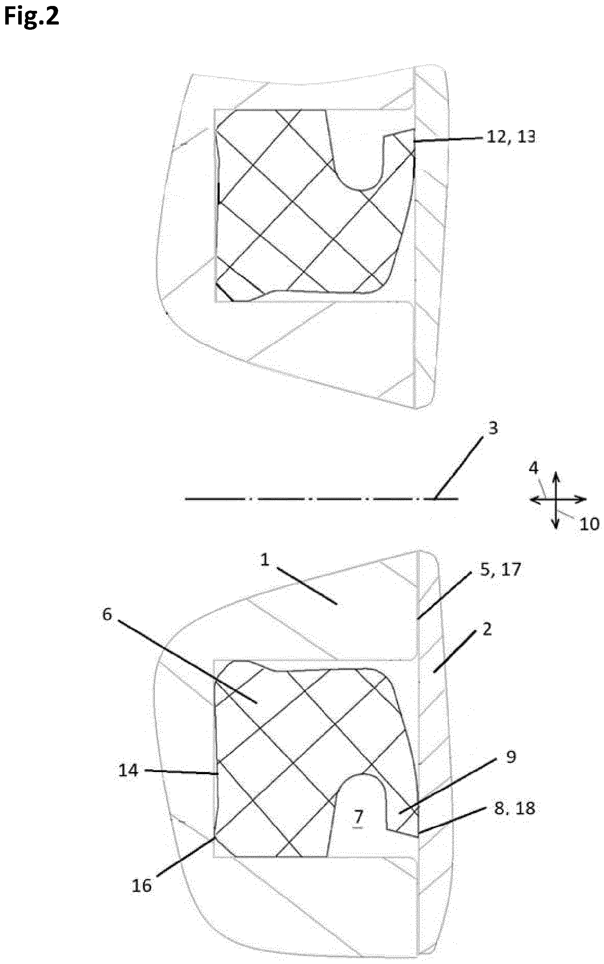

In Figur 1 ist der Axialdichtring 6 radial innendichtend, in Figur 2 demgegenüber radial außendichtend ausgebildet.

Der Axialdichtring 6 umfasst in diesen Ausführungsbeispielen zwei in axialer Richtung 4 mit Abstand zueinander benachbart angeordnete Stirnseiten 14, 15, wobei die erste Stirnseite 14 eine statisch beanspruchte 2. Dichtlippe 16 und die zweite Stirnseite 15 die dynamisch beanspruchte 1. Dichtlippe 9 aufweist. Der Axialdichtring 6 und die Dichtlippen 9, 16 sind jeweils rotationssymmetrisch ausgebildet.

Die Dichtungsanordnung umfasst das erste Maschinenelement 1 und das zweite Maschinenelement 2, die konzentrisch zueinander angeordnet und um die Rotationsachse 3 relativ zueinander verdrehbar sind. In axialer Richtung 4 sind sich die Maschinenelemente 1, 2 mit Abstand 5 benachbart zugeordnet, wobei sich durch den Abstand 5 ein abzudichtender Dichtspalt 17 zwischen den Maschinenelementen 1, 2 ergibt.

Der Axialdichtring 6 ist mit seiner zweiten Dichtlippe 16 in der Einbaunut 7 des ersten Maschinenelements 1 dichtend angeordnet und berührt mit seiner 1. Dichtlippe 9 die Dichtfläche 8 des zweiten Maschinenelements 2 unter axialer Vorspannung dichtend.

Erfindungsgemäß ist es vorgesehen, dass die Einbaunut 7, bezogen auf die Rotationsachse 3, in radialer Richtung 10 exzentrisch verschoben angeordnet ist.

Im hier gezeigten Ausführungsbeispiel beträgt die exzentrische Verschiebung der Einbaunut 7 bezogen auf die Rotationsachse 3 etwa 0,5 mm bei einem Durchmesser des Axialdichtrings von etwa 350 mm.

Die Exzentrizität der Einbaunut 7 in der Dichtungsanordnung bewirkt eine Verbreiterung der Laufspur 18 auf der Dichtfläche 8, die während der bestimmungsgemäßen Verwendung der Dichtungsanordnung von der 1. Dichtlippe 9 des Axialdichtrings 6 überstrichen wird. Bei jeder Umdrehung der Laufspur 18 relativ zur dynamisch beanspruchten 1. Dichtlippe 9 wird diese durch frisches abzudichtendes Medium aktiv geschmiert.

In Figur 1 ist die 1. Dichtlippe radial innendichtend, in Figur 2 radial außendichtend am Axialdichtring 6 angeordnet.

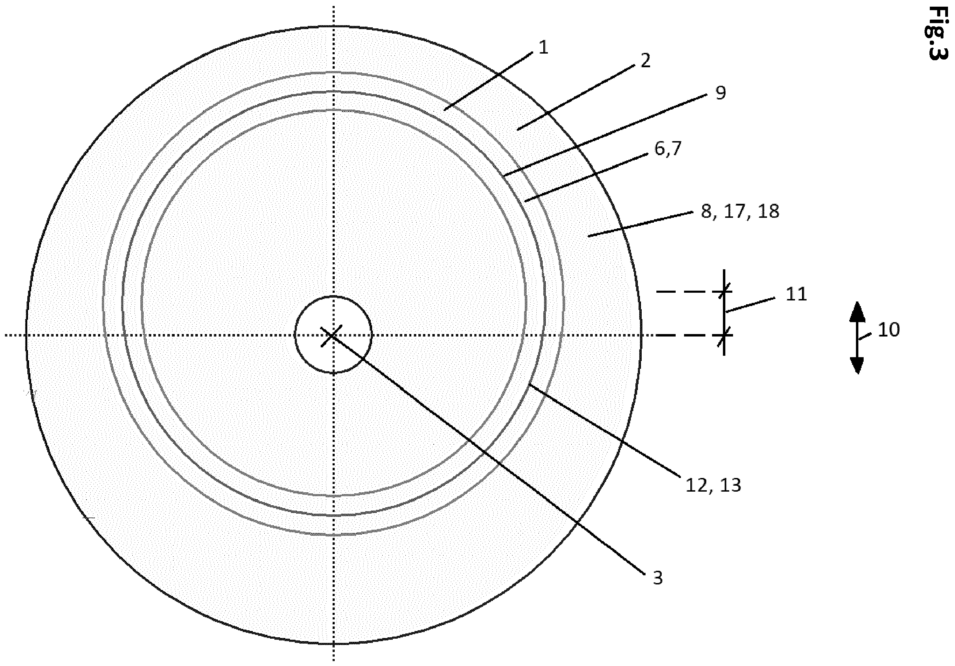

In Figur 3 ist die an sich symmetrisch ausgebildete, aber exzentrisch in der Dichtungsanordnung angeordnete Einbaunut 7 gezeigt. Die Einbaunut 7 ist, bezogen auf die Rotationsachse 3, in radialer Richtung 10 exzentrisch verschoben angeordnet. Die 1. Dichtlippe 9 ist konzentrisch in der Einbaunut 7 angeordnet, bezogen auf die Rotationsachse 3 und die Dichtfläche 8 jedoch exzentrisch verschoben.

## Patentansprüche

1. Dichtungsanordnung, umfassend ein erstes Maschinenelement (1) und ein zweites Maschinenelement (2), wobei die Maschinenelemente (1, 2) konzentrisch zueinander angeordnet, um eine Rotationsachse (3) relativ zueinander verdrehbar und einander in axialer Richtung (4) mit Abstand (5) benachbart zugeordnet sind sowie einen Axialdichtring (6), der in einer Einbaunut (7) des ersten Maschinenelements (1) dichtend angeordnet ist und eine Dichtfläche (8) des zweiten Maschinenelements (2) mit zumindest einer 1. Dichtlippe (9) unter axialer Vorspannung dichtend berührt, **dadurch gekennzeichnet, dass** die Einbaunut (7), bezogen auf die Rotationsachse (3), in radialer Richtung (10) exzentrisch verschoben angeordnet ist.

2. Dichtungsanordnung nach Anspruch 1, **dadurch gekennzeichnet, dass** die Verschiebung (11) 0,01 mm bis 20 mm beträgt.

3. Dichtungsanordnung nach Anspruch 2, **dadurch gekennzeichnet, dass** die Verschiebung (11) 0,1 mm bis 1 mm beträgt.

4. Dichtungsanordnung nach Anspruch 1, **dadurch gekennzeichnet, dass** die Dichtlippe (9) symmetrisch ausgebildet ist.

5. Dichtungsanordnung nach einem der Ansprüche 1 oder 4, **dadurch gekennzeichnet, dass** die 1. Dichtlippe (9) radial innen- (12) oder radial außendichtend (13) am Axialdichtring (6) angeordnet ist.
